# EUROPEAN PATENT APPLICATION

(11) **EP 1 327 537 A1**
(43) Date of publication of application: **16.07.2003**
(21) Application number: 02425006.0
(22) Date of filing: 09.01.2002
(51) Int. Cl.: B60C 27/08

(54) **Links for an anti-skid chain having enhanced section**

(71) Applicant: MAGGI CATENE S.P.A., 23854 Olginate (LECCO) (IT)
(72) Inventor: Maggi, Corrado, 23896 Sirtori (IT); Maggi, Giuseppe, 23900 Lecco (IT)
(74) Representative: Faggioni, Carlo Maria, Dr. Ing.

(57) **Abstract**

A link with an improved cross-section and a snow-chain obtained with this link are described, the cross-sectional profile having at least two external sides converging towards each other, said link being intended to operate in an oblique condition with respect to the tyre and the ground.

## Description

The present invention relates to a snow chain with links having an improved cross-section.

As is known, snow-chains for tyres are composed normally of an external element and an internal element which are parallel and can be closed in the form of a ring and which have, extending between them, transverse gripping elements (i.e. the elements actually performing the anti-skid function) which adhere to the exposed part of the tyre tread.

Whereas the external element assumes a wide range of forms - although being basically, in most cases, a section of steel chain - the internal element is often simply a flexible cable to which the ends of the transverse gripping elements are fastened.

The transverse elements may assume different patterns, both in terms of arrangement and in terms of length, but generally are formed by sections of chains with annular links (of greater or smaller length) connected together by suitable fastening means.

According to one possible arrangement, a series of chain sections are arranged transversely, from the external element to the internal element, embracing the tread.

Another arrangement which has become widely established, owing to the good performance which it is able to exhibit also in side-slipping conditions, is that which envisages a series of rhombus shapes which are fastened to the facing sides of the external element and internal element and are connected together by linking chains arranged along the longitudinal axis of the tyre. A typical rhombus chain has six rhombus shapes over the whole linear extension of the chain.

The minimum number of links which form these gripping elements, in addition to being governed by dimensional requirements of the tyre and structural strength, is also determined by the adherence effect (or "grip") which is to be obtained. In other words, in order to be able to transmit to the ground a certain power and exert an action sufficient to prevent skidding, the number of links which adhere to the ground at any one moment may not be less than a predetermined value.

Theoretically, the lower the number and the robustness of the links used, the lower will be the quantity of material used and the complexity of the manufacturing operations required: consequently the overall cost of the chain will decrease.

However, as regards that stated above, in chains of the prior art, this scope meets a major restriction on the gripping performance which is to be achieved.

Therefore a first requirement which arises in this sector is to obtain a low-cost chain, reducing the number of links used without adversely affecting the anti-skid properties.

It must also be pointed out that, since the cross-section of the links used in this field is square or "half rounded", the chains tend to be designed so that, in the gripping elements, most of the links work with the smaller axis arranged perpendicularly with respect to the tread tyre and to the road surface. As a result, these links are obliged to have their larger surface facing the ground and the tread so as to obtain the best grip.

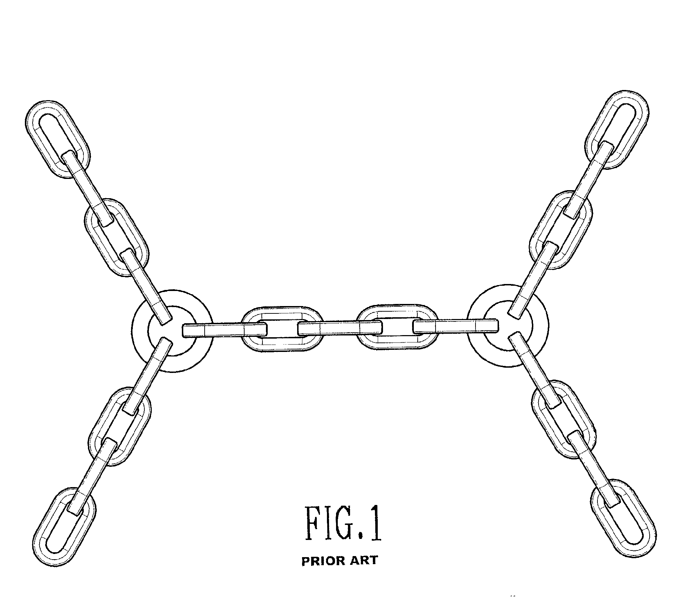

In order to ensure that the chain sections operate in this manner, various measures are commonly adopted. For example, an arrangement which can be applied to the central linking chain and which is illustrated in Fig. 1, consists in connecting the end links to joining rings and in providing a number of odd links between the two adjacent connecting rings. As can be seen in Fig. 1, this obliges the linking chain to work "edgewise".

However, this solution which is widely used involves further problems. First of all, only one out of every two links transmits the tractional force of the tyre onto the road surface, which results in premature wear of the chain.

Moreover, the overall thickness of the chain mounted on the tyre is equal to the width of the links which, for structural reasons, is never smaller than 9 mm. This also increases the rolling noise.

Finally, the length of the arm of the frictional force on the link and the unstable nature of this arrangement are such that the transverse chain sections tend to twist and changing "edge" during every cycle where they come into contact with the ground, with a deterioration in the comfort characteristics and wear of the chain.

These problems have induced some manufacturers to introduce onto the market chains in which the links may be arranged at about 45° with respect to the working surface. However, in this case, since the working surface area offered by the links is very much smaller (they work in fact along their edges), it is necessary to increase the number of said links in order to obtain a suitable grip, with a consequent increase in costs.

The object of the present invention is therefore to overcome these drawbacks of the prior art, by providing a snow-chain which offers a suitable grip, but at the same time is not subject to excessive wear, has an extremely low cost and a limited transverse dimension.

This object is achieved by means of a link for snow-chains and the associated snow-chain, the main features of which are described in the accompanying claims.

Further characteristic features and advantages of the chain according to the invention will nevertheless emerge more clearly from the detailed description which follows of a preferred embodiment thereof, provided by way of example and illustrated in the accompanying drawings, in which:
Fig. 1, as already mentioned, is a plan view of a chain portion according to the prior art;
Fig. 2 is a plan view of a chain section according to the invention;
Fig. 2A is a partial side elevation view of the area around a joining ring of a chain according to the invention;
Fig. 3 is a plan view of a complete chain according to an embodiment of the invention;
Fig. 4 is a partial cross-sectional view of a first embodiment of a link according to the invention;
Fig. 4A is a cross-sectional view of the complete link according to Fig. 4 in the working condition;
Fig. 5 is a cross-sectional view of a second embodiment of a link according to the invention; and
Fig. 5A is a front elevation view of two links according to the embodiment of Fig. 5 in the working condition;

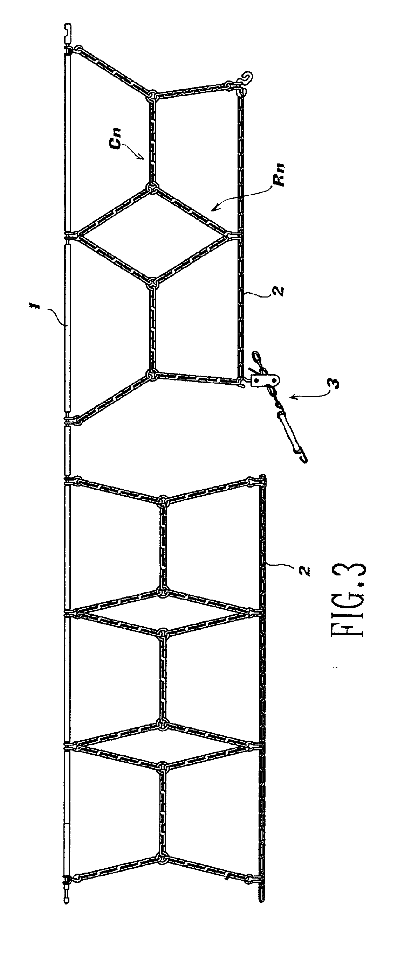

Fig. 3 shows a complete snow-chain comprising a first fastening cable 1 and an external fastening chain 2, which is interrupted in a zone where a chain-tensioning device 3 of the known type is provided. A series of closed-link chain sections, arranged in a rhombus configuration R1, R2, ... Rn connected together by central linking chains C1, C2, ... Cn, extend between the cable 1 and the chain 2.

The links, which form these chain sections, extend between the respective fastening points in an oblique condition: namely the respective transverse axes are not perpendicular or parallel to the tyre tread, but are inclined at about 45° alternately in one direction and in the opposite direction.

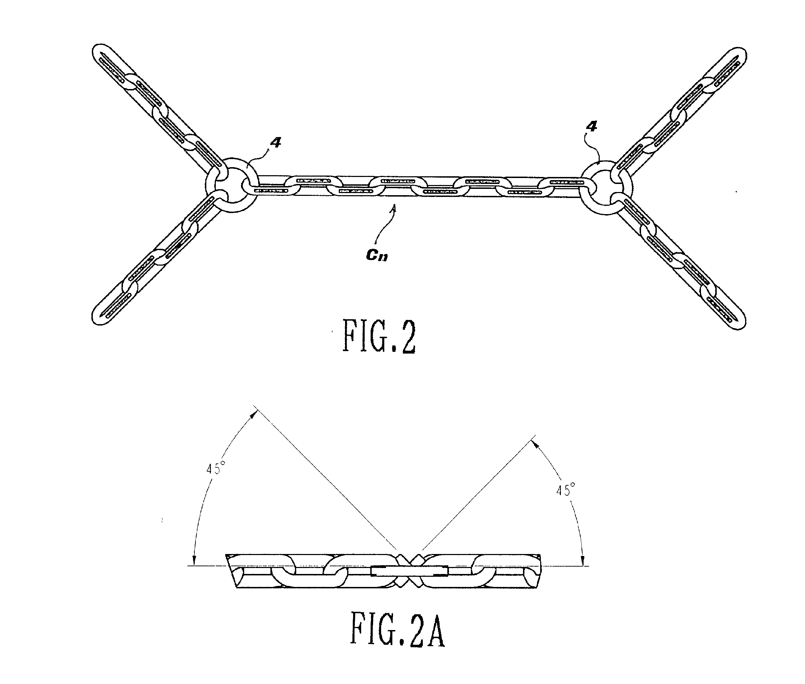

Fig. 2 shows a chain portion in the vicinity of two flat and sufficiently thin joining rings 4. The central linking chain Cn has an even number of links so that it is obliged to extend between the two rings 4 in the inclined condition mentioned above.

In this way all the links, at least in the central portion of the chain providing grip between the ground and the tyre, are able to work positively so as to cooperate with the gripping action of the chain. This is highlighted in Fig. 2 by the darker contact areas which are present, in alternating positions, on each link.

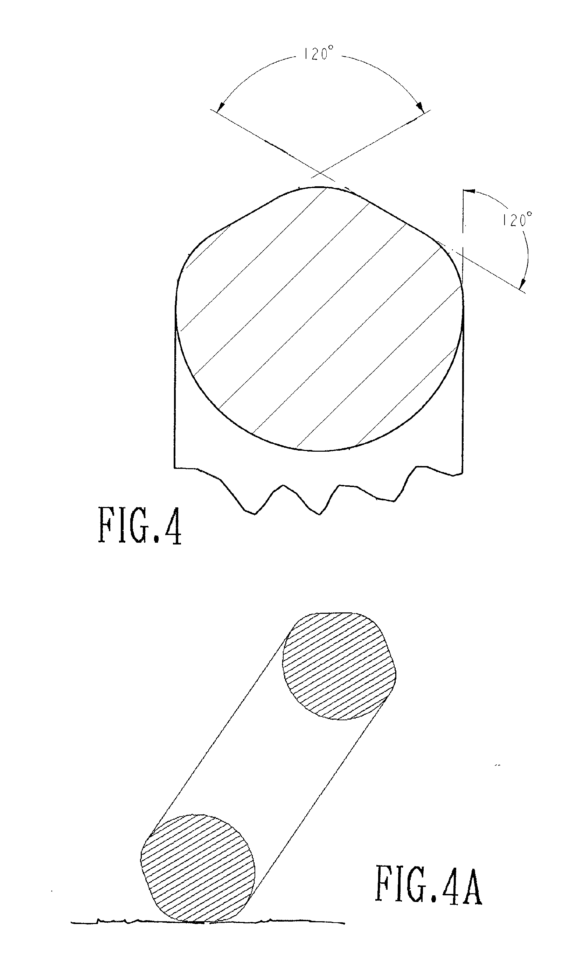

According to a preferred embodiment of the invention, the cross-section of the links has a profile as illustrated in Fig. 4. In particular, the external surface of the link has two sides converging at an angle of about 120°, the remaining perimetral portion being substantially circular.

With this new profile, each link, even if it rests in an oblique condition on the tread and on the ground, nevertheless offers a fairly large frictional surface area. This result can be clearly understood from Fig. 4A, where a link according to the invention is shown engaged with the ground in normal operating conditions.

It must be understood that the same bearing action occurs between the links and the tyre, this allowing an increase in the friction between chain and tyre tread and therefore preventing relative displacement between each other.

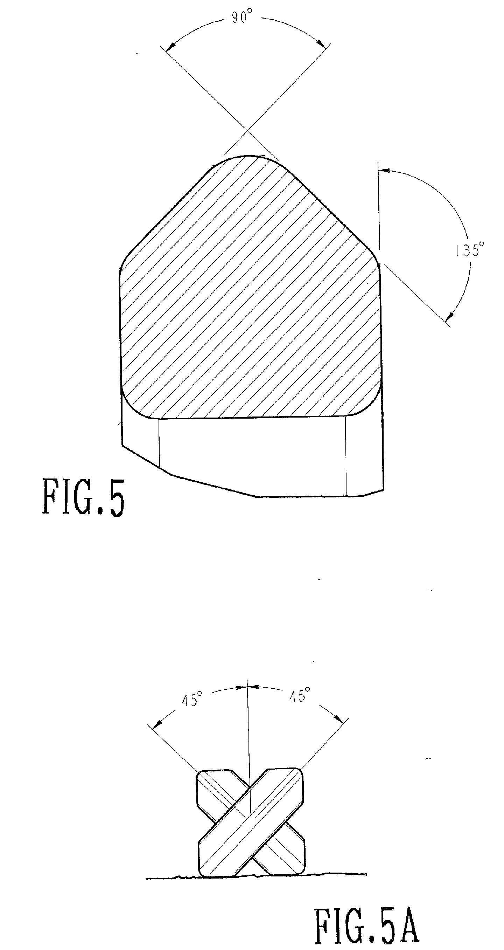

Fig. 5 shows another embodiment of a link according to the invention. In this case the two external sides converge at an angle of about 90°, while the remaining perimetral portion forms a rectangle.

Fig. 5A shows the way of co-operating between two links constructed in accordance with this embodiment, in relation to a ground line. In this case also it is apparent that the frictional surface area of the links is very large with regard to both the ground and the tyre.

The method of obtaining these profiles is undoubtedly within the competence of a person skilled in the art and could consist, for example, in a process involving drawing of standard circular or square profiles.

The Applicant has been able to verify that cross-sectional profiles with external sides inclined in a range of between 40° and 60° (with respect to the longitudinal axis a-a' of the link), preferably in the region of 45°, offer the best results with reference to the gripping quality of the links.

This advantageous effect allows the number of links to be reduced, compared to the inclined-link solutions of the prior art, nevertheless without varying the gripping capacity of the chain and the stability of the engagement between chain and tyre. It has been shown that the number of rhombus shapes may be reduced to five instead of the six traditionally used, without the performance being affected in any way.

Fig. 3 shows a particularly preferred embodiment, in which each rhombus has eight links on each side.

Consequently, it is possible to obtain a chain with an excellent performance, with small transverse dimensions and low noise levels, but at an extremely low cost. The fact that all the links rest on the ground with a substantial surface area - at least 30% more than that offered by the edge of a link of the prior art - also ensures, from the start of use, regular and evenly distributed wear, increasing the duration of the chain.

It is understood, however, that the invention is not limited to the particular configurations illustrated above, which represent only non-limiting examples of the scope of the invention, but that numerous variations are possible, all within the reach of a person skilled in the art, without thereby departing from the scope of the said invention.

For example, it is not necessary for the two external sides of the link cross-section to converge in a symmetrical manner with respect to the longitudinal central axis of the link itself. A person skilled in the art will be able to adopt the best solution or compromise also on the basis of the specific working conditions envisaged for the chain.

## Claims

1. Link for a snow-chain, **characterized in that** it has a cross-sectional profile having at least two external sides converging towards each other.

2. Link as claimed in Claim 1), in which said converging external sides form an angle, with respect to the longitudinal central axis of the link, in a range of between about 40° and 60°, and preferably of about 45°.

3. Snow-chain of the type comprising two internal and external annular elements between which a series of gripping elements consisting of chain sections extend, **characterized in that** said chain sections, at least in the portion intended to engage with the ground, have links as claimed in Claims 1) or 2).

4. Chain as claimed in Claim 3), in which said chain sections are constrained so as to be arranged with the links oblique, alternately on one side and the other, with respect to the surface of the ground and the tyre tread with which they are intended to engage.

5. Chain as claimed in Claim 3) or 4), in which said chain sections are arranged according to a certain number of rhombus shapes connected together by central linking chains.

6. Chain as claimed in Claim 5), in which said rhombus shapes total five in number.
